(19) **Europäisches Patentamt / European Patent Office / Office européen des brevets**

(11) **EP 2 704 379 A2**

(12) **EUROPEAN PATENT APPLICATION**

(43) Date of publication:
05.03.2014 Bulletin 2014/10

(51) Int Cl.:
*H04L 12/723* (2013.01)

(21) Application number: 13182181.1

(22) Date of filing: 29.08.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.08.2012 US 201213599831**

(71) Applicant: **Vodafone IP Licensing Limited**
**The Connection**
**Newbury**
**Berkshire RG14 2FN (GB)**

(72) Inventors:
• **Ignatyev, Oleksiy**
**Newbury, Berkshire RG14 2FN (GB)**
• **Scharf-Katz, Volkmar**
**Newbury, Berkshire RG14 2FN (GB)**
• **Arjomandi, Fay**
**Newbury, Berkshire RG14 2FN (GB)**

(74) Representative: **Boult Wade Tennant**
**Verulam Gardens**
**70 Gray's Inn Road**
**London WC1X 8BT (GB)**

(54) **Information flow optimization in communication systems**

(57) Systems and methods of optimizing information flow for a plurality of users in a communication system having a plurality of forms of communication. The methods can be performed by one or more computer devices. In one method, for each form of communication of the communication system, the method includes steps of determining connection and/or communication pathways between users, applying one or more edge weights to each pathway, and calculating a centrality value for each user. The method can also include introducing information into the communication system through one or more of the users, the one or more users being selected based on the centrality values associated therewith. In one method, an overall centrality value that takes into account all of the forms of communication can be calculated for each user and information can be introduced into the communication system through one or more users having the highest calculated overall centrality values. A method of optimizing information flow for a web site structure is also included.

Fig. 3A

**Description**

**BACKGROUND OF THE INVENTION**

The Field of the Invention

The present invention relates to communication systems. More specifically, the present invention relates to methods, systems, and apparatuses that determine and optimize information flow in communication systems using graph theory.

The Relevant Technology

Only a few decades ago, the only form of communication available between two entities, individual or business, was written communications, such as letters, and telephone calls. Of these, only telephone calls were electronic in nature. As a result, it was fairly easy to determine who was electronically communicating with whom and how often. This data was used to determine demographic and other information relating to individuals, businesses, communities, etc. Advertisers and other entities were able to use the demographic and other information to determine which individuals, businesses, communities, etc. would be most likely to be most likely to purchase whatever product the advertiser was selling or be most receptive to whatever message an organization was espousing. Using this information, the advertisers and other entities could then focus their electronic efforts on those individuals, businesses, communities, etc.

In the last few decades, however, the number of forms of electronic communication has dramatically increased, especially in the last decade or so. For example, besides the land-line telephone calls that existed before, people now can also communicate with each other using the additional following forms of electronic communication: mobile telephone calls, emails, text messages, instant messages, internet applications (such as Facebook™, Twitter™ and those that use Voice Over Internet Protocol (VOIP) (e.g., Skype™)), etc.

Furthermore, every day, more and more people are acquiring devices to allow them to avail themselves of the many available mobile networks. These devices can include, for example, cellular phones, tablets, smart phones, laptop PC cards, consumer electronics, sensors, automobiles, and the like. As a result, mobile networks are experiencing significantly more traffic than they were even just a few years ago. As with cars on a freeway, with the increased traffic comes congestion.

To combat the congestion, mobile network owners are constantly trying to find ways to allow their mobile networks to run more smoothly and efficiently. However, because of the many forms of electronic communication within today's networks and the vast amount of generated data, optimizing data flow through the networks can be especially difficult.

In addition, advertisers and other entities are also searching for ways to efficiently introduce information into networks so the information will disseminate within the network in an efficient manner.

Finally, in a similar manner, web developers and owners are also searching for ways to optimize web sites for the smoother flow of information therethrough.

**BRIEF SUMMARY**

Embodiments of the present invention relate to systems and methods for optimizing communication information flow.

In one embodiment, a method of optimizing information flow for a plurality of users in a communication system having a plurality of forms of communication is disclosed. The method can be performed by one or more computer devices or systems. The method includes, for each form of communication, determining connection and/or communication pathways between users; applying one or more edge weights to each pathway; and calculating a centrality value for each user. The method also includes introducing information into the communication system through one or more of the users, the one or more users being selected based on the centrality values associated therewith.

The step of introducing information into the communication system through one or more of the users can be accomplished by applying contribution weights to the centrality values calculated for each form of communication to normalize the centrality values of each form of communication with respect to the centrality values of the other forms of communication; calculating an overall centrality value for each user by aggregating the normalized centrality values corresponding to the user; and introducing information into the communication system through the user having the highest calculated overall centrality value.

Alternatively, the step of introducing information into the communication system through one or more of the users can be accomplished by introducing information into each form of communication through the respective user having the highest calculated centrality value corresponding to the form of communication.

In another embodiment, a method of optimizing information flow for a plurality of users in a communication system having a plurality of forms of communication is disclosed. The method can be performed by one or more computer devices or systems. The method includes determining connection and/or communication pathways between users in all of the forms of communication; applying one or more edge weights to each pathway in each form of communication to determine an overall weighted pathway value for each pathway; calculating an overall centrality value for each user by aggregating all of the overall weighted pathway values corresponding to the user; and introducing information into the communication system through the user having the highest calculated overall centrality value.

In another embodiment, a method of optimizing information flow for a optimizing information flow for a web site structure having a plurality of web pages is disclosed. The method can be performed by one or more computer devices or systems. The method includes determining connection and/or communication pathways between the web pages; applying an edge weight to each pathway; calculating a centrality value for each web page; and modifying the web site structure based on the centrality values associated with the web pages.

Modifying the web site structure can be accomplished by removing pathways between connected web pages when the edge weight associated with the pathway is less than a predetermined percentage of all edge weights associated with one of the connected web pages.

Alternatively, modifying the web site structure can be accomplished by adding a pathway between unconnected web pages when it is determined that a predetermined percentage of users access one of the unconnected web pages within a predetermined period of time of accessing the other unconnected web page.

The foregoing summary is illustrative only and is not intended to be in any way limiting; the summary is provided to introduce a selection of concepts in a simplified form that are further described below in the Detailed Description. The summary is not intended to identify key features or essential features of the claimed subject matter, nor is it intended to be used as an aid in determining the scope of the claimed subject matter.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

## BRIEF DESCRIPTION OF THE DRAWINGS

Various embodiments of the present invention will now be discussed with reference to the appended drawings. It is appreciated that these drawings depict only typical embodiments of the invention and are therefore not to be considered limiting of its scope. In the drawings, like numerals designate like elements. Furthermore, multiple instances of an element may each include separate letters appended to the element number. For example two instances of a particular element "20" may be labeled as "20a" and "20b". In that case, the element label may be used without an appended letter (e.g., "20") to generally refer to every instance of the element; while the element label will include an appended letter (e.g., "20a") to refer to a specific instance of the element.

Figure 1 illustrates an exemplary computing system on which principles described herein may be employed;

Figure 2 illustrates an exemplary communication environment in which principles described herein may be employed;

Figure 3A illustrates a graphical representation of a single-dimension connection graph showing connection and/or communication pathways between five users, generated according to one embodiment of the invention;

Figure 3B illustrates a graphical representation of a single-dimension connection graph showing pathways between five users, generated according to another embodiment of the invention;

Figure 4 illustrates a method of determining one type of centrality value for each user in a single-dimension according to one embodiment of the invention;

Figure 5 illustrates a method of optimizing information flow for each user in a multi-dimensional system according to one embodiment of the invention;

Figure 6 illustrates a method of optimizing information flow for each user in a multi-dimensional system according to another embodiment of the invention;

Figure 7A illustrates a graphical representation of a multidimensional connection graph showing connection and/or communication pathways between five users, generated according to one embodiment of the invention;

Figure 7B illustrates a graphical representation of a multidimensional connection graph showing connection and/or communication pathways between five users, generated according to another embodiment of the invention;

Figure 8A illustrates a graphical representation of a connection graph showing connection and/or communication pathways between different pages of a web site, generated according to one embodiment of the invention;

Figure 8B illustrates a graphical representation of a connection graph showing connection and/or communication pathways between different pages of a web site, generated according to another embodiment of the invention;

Figure 8C illustrates a graphical representation of the connection graph shown in Figure 8B, modified to increase efficiency in the movement of users through the web pages according to one embodiment of the invention; and

Figure 9 illustrates a method of optimizing information flow in a web site according to one embodiment of the invention.

## DETAILED DESCRIPTION OF PREFERRED EMBODIMENTS

In the following detailed description, reference is made to the accompanying drawings, which form a part hereof. In the drawings, similar symbols typically identify similar components, unless context dictates otherwise. The embodiments described in the detailed description, drawings, and claims are not meant to be limiting. Other embodiments may be utilized, and other changes may be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein. It will also be understood that any reference to a first, second, etc. element in the claims or in the detailed description, is not meant to imply numerical sequence, but is meant to distinguish one element from another unless explicitly noted as implying numerical sequence.

In addition, as used in the specification and appended claims, directional terms, such as "top," "bottom," "up," "down," "upper," "lower," "proximal," "distal," "horizontal," "vertical," and the like are used herein solely to indicate relative directions and are not otherwise intended to limit the scope of the invention or claims.

The present invention relates to communication systems. More specifically, the present invention relates to methods, systems, and apparatuses that determine and optimize information flow in communication systems using graph theory. Communication systems, as used herein, can incorporate any type of communication system, including, but not limited to: telecommunication systems, network communication systems, internet systems, and web site structures.

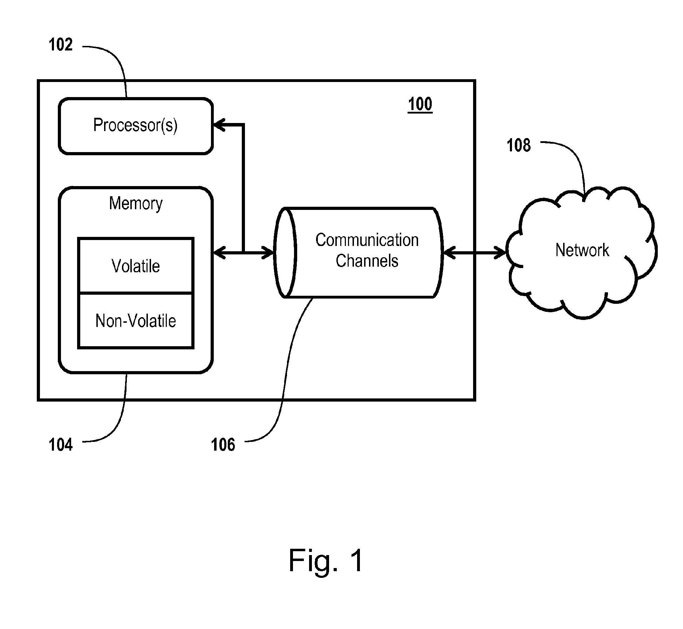

Some introductory discussion regarding general computing systems and computing environments in or on which the principles described herein may be employed will now be described with reference to Figure 1.

Computing systems are now increasingly taking a wide variety of forms. Computing systems may, for example, be handheld devices, appliances, laptop computers, desktop computers, mainframes, distributed computing systems, or even devices that have not conventionally been considered a computing system. In this description and in the claims, the term "computing system" is defined broadly as including any device or system (or combination thereof) that includes at least one physical and tangible processor, and a physical and tangible memory capable of having stored thereon computer-executable instructions that may be executed by the processor(s). The memory may take any form and may depend on the nature and form of the computing system. A computing system may be distributed over a network environment and may include multiple constituent computing systems.

Embodiments described herein may comprise or utilize a special purpose or general-purpose computer including computer hardware, such as, for example, one or more processors and system memory. For example, Figure 1 illustrates an exemplary computing system 100. As illustrated in Figure 1, in its most basic configuration, computing system 100 typically includes at least one processing unit 102 and memory 104. The memory 104 may be physical system memory, which may be volatile, non-volatile, or some combination of the two. The term "memory" may also be used herein to refer to non-volatile mass storage such as physical storage media. If the computing system 100 is distributed, the processing, memory and/or storage capability may be distributed as well. As used herein, the term "module" or "component" can refer to software objects or routines that execute on the computing system 100. The different components, modules, engines, and services described herein may be implemented as objects or processes that execute on the computing system 100 (e.g., as separate threads).

In the description that follows, embodiments are described with reference to acts that are performed by one or more computing systems, such as the computing system 100. If such acts are implemented in software, one or more processors of the associated computing system that performs the acts direct the operation of the computing system in response to having executed computer-executable instructions. An example of such an operation involves the manipulation of data. Within the context of the computing system 100, computer-executable instructions (and the manipulated data) may be stored in the memory 104. Computing system 100 may also contain communication channels 106 that allow the computing system 100 to communicate with other message processors over, for example, network 108.

Embodiments described herein also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments of the invention can comprise at least two distinctly different kinds of computer-readable media: computer storage media and transmission media.

Computer storage media includes recordable-type storage media, such as RAM, ROM, EEPROM, CD-ROM or other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network (e.g., the network 108) and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a Network Interface Controller (NIC)), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter is described herein using language specific to structural features and/or methodological acts, it is to be understood that the subject matter defined in the appended claims is not necessarily limited to the described features or acts described herein. Rather, the features and acts described herein are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

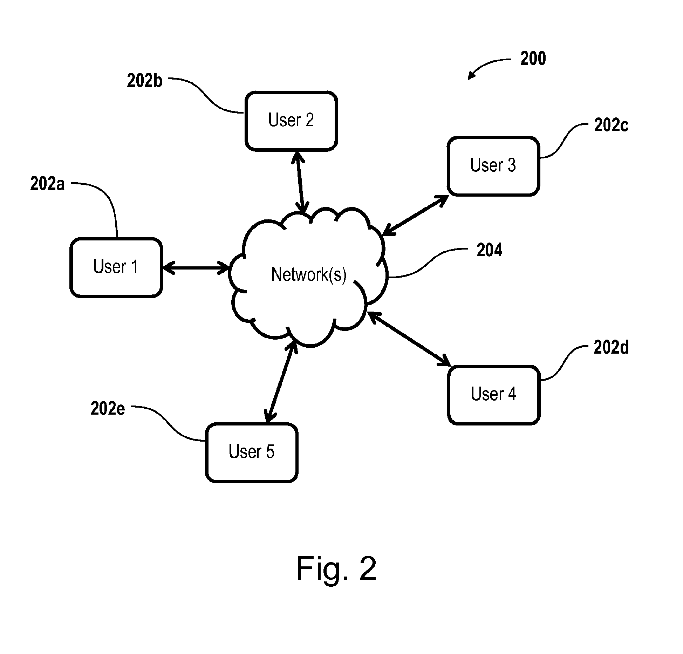

Figure 2 illustrates an exemplary environment 200 in which the principles described herein may be employed. The environment includes multiple users 202 (202a-202e) that electronically communicate with each other using one or more electronic networks 204. Each user 202 can be an individual, an organization, a business entity, or any other type of group. In addition, there may be multiple layers of users. For example, on a first layer a user may be a business entity, and on a second layer a user may be an employee of the business entity. As such, there may be multiple users of one layer associated with a single user in another layer. Although only five users 202 are illustrated, it will be appreciated that a virtually unlimited number of users, within practical limits, can be incorporated within embodiments of the present invention; only five users are being illustrated for ease of discussion.

For one user to electronically communicate with another user, different forms of communication corresponding to the network(s) 204 may be used. Examples include, but are not limited to, telephone calls (both land-line and mobile), emails, text messaging, instant messaging, internet applications (such as Facebook™, Twitter™, and those that use Voice Over Internet Protocol (VOIP) (e.g., Skype™), etc.) In the discussion herein, each of these forms of communication can be considered a "dimension" of communication. Thus, the phrase "single dimension," along with its derivatives, refers herein to any one of the forms of communication. Similarly, the phrases "multiple dimensions" and "multidimensional," along with their derivatives, refer herein to two or more of the forms of communication.

Many of these forms of communication were only made possible a few years ago. It is likely, therefore, that even more forms of communication (i.e., dimensions) not known today will be used in the future. Those forms of communication are also envisioned by the concepts of the present application and embodiments of the invention can incorporate those unknown forms of communication when the unknown forms become available.

Most people today avail themselves of more than one of the available forms of electronic communication. For example, may people make mobile telephone calls and generate text messages from the same cellular telephone. In addition, most of today's "smart phones" and tablets include the ability to send and receive emails and access the internet through the mobile network, thereby allowing owners of those devices to avail themselves of those additional forms of communication.

Many of the different forms of communication discussed above can be accessed using the same network. For example, the forms of communication available on "smart phones" and tablets, discussed above, are typically included in most of today's mobile communication calling plans. In light of the above, most people use multiple forms of communication in their daily lives.

As a result, mobile networks are experiencing significantly more traffic than they were even just a few years ago, leading to increased congestion. To combat the congestion, mobile network owners are constantly trying to find ways to allow their mobile networks run more smoothly and efficiently. However, because of the many forms of electronic communication within today's networks, optimizing data flow through the networks can be especially difficult.

In addition, advertisers and other entities are also searching for ways to efficiently introduce information into networks so the information will disseminate within the network in an efficient manner. The advertisers and other entities find it very difficult, if not impossible, to determine demographic and other information relating to individuals, businesses, communities, etc. that takes into account all of the different forms of communication. That is, because of the use of so many different dimensions, general information regarding any particular user based on a combination of all of the different dimensions is not available.

Embodiments of the invention can be used to help remedy these and other problems in the art. That is, using embodiments of the present invention, information flow in communication systems can be optimized for more efficient flow. Using this information, advertisers or other entities can determine the best manner for introducing information into a network so that the information more efficiently flows through the network and web page designers can modify web sites so that users can more efficiently traverse through the web pages associated with the web sites.

Embodiments of the present invention use the principles of graph theory to obtain such information. Graph theory is the study of graphs, which are mathematical structures used to model pairwise relations between objects from a collection, such as a network. A "graph" in this context is a collection of "vertices" or "nodes" and a collection of "edges" or "arcs" that connect pairs of vertices. Vertices are said to be adjacent if they are connected by an edge.

A graph may be undirected, meaning that there is no distinction between the two vertices associated with each edge, or its edges may be directed from one vertex to another. In mathematical terms, a graph for a network comprising a set of vertices V and a set of edges E is represented as $G(V,E)$. As such, the term "graphs" in graph theory refer to networks rather than visual charts. This graph representation provides a way to capture and quantify connections between vertices.

Embodiments of the present invention incorporate principles of graph theory to analyze information flow through a system and to determine effective manners to insert information so that the information can efficiently flow through the system. For example, using graph theory, the concept of centrality is used in embodiments of the present invention to determine the relative importance of each of the vertices of the system to aid in determining efficient flow of information. Depending on how it is measured, the centrality values of the vertices can indicate relative influence of the vertex, relative throughput of information, etc. The vertices can represent users in a network, web pages on a web site, or any other type of node through which information can flow.

Although graphs refer to networks in graph theory, graphs can be represented graphically by drawing a dot or circle for every vertex, and drawing a line or an arc between two vertices if they are connected by an edge. If the graph is directed, the direction of the line or arc is indicated by drawing an arrow.

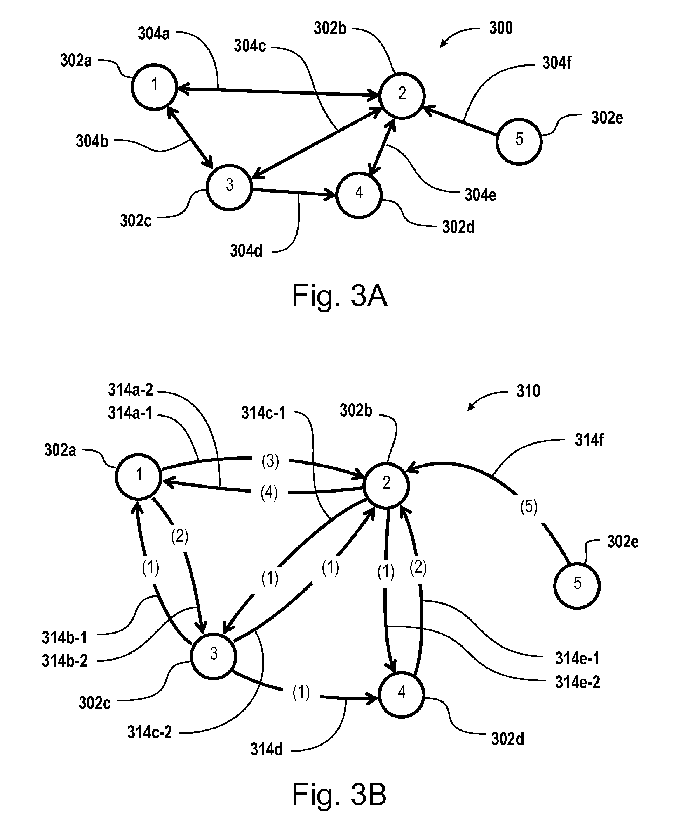

For example, Figure 3A is a graphical representation of a single-dimension connection graph 300 representing mobile telephone calls made between users in a particular time period in exemplary mobile network 204, according to sample data shown in Table 1, below, where each arrow ($\rightarrow$) represents the direction of the associated call (e.g., "User 1 $\rightarrow$ User 2" signifies that User 1 initiated the call). The connection graph is a single-dimension graph because only on form of communication is being represented. As noted above, only five users are being represented in the exemplary network for ease of discussion; many more than five users would likely be found in networks and systems that can employ the methods discussed herein.

Table 1.

| Users involved | Mobile Calls Made |
|---|---|
| User 1 → User 2 | 3 |
| User 1 → User 3 | 2 |
| User 1 → User 4 | 0 |
| User 2 → User 1 | 4 |
| User 2 → User 3 | 1 |
| User 2 → User 4 | 1 |
| User 3 → User 1 | 1 |

(continued)

| Users involved | Mobile Calls Made |
|---|---|
| User 3 → User 2 | 1 |
| User 3 → User 4 | 1 |
| User 4 → User 1 | 0 |
| User 4 → User 2 | 2 |
| User 4 → User 3 | 0 |
| User 4 → User 5 | 0 |
| User 5 → User 2 | 5 |
| User 5 → User 4 | 0 |

Connection graph 300 has five vertices 302 (302a-302e), which respectively represent the five users 202a-202e of Figure 2. A number of edges 304 (304a-304f) are also included which represent mobile telephone call pathways used between users 202 during the time period, based on the sample data. The arrows on connection and/or communication pathways 304 indicate the direction of calls made using the pathways, with bidirectional arrows indicating that calls were initiated by both parties during the time frame. Although only five users are represented in connection graph 300, it will be appreciated that virtually any number of users can be represented, if desired. As noted above, five users have been selected herein solely to simplify the discussion.

The following information can be ascertained from connection graph 300. During the selected time period, connection and/or communication pathways were used between the following pairs of users: 1-2, 1-3, 2-3, 2-4, 2-5, and 3-4. Thus, those pairs of users are said to be adjacent pairs. Furthermore, connection graph 300 tells us that user 1 initiated at least one call to each of users 2 and 3 and received at least one call from each of users 2 and 3; user 2 initiated at least one call to each of users 1, 3, and 4 and received at least one call from each of users 1, 3, 4, and 5; user 3 initiated at least one call to each of users 1, 2, and 4 and received at least one call from each of users 1 and 2; user 4 initiated at least one call to user 2 and received at least one call from each of users 2 and 3; and user 5 initiated at least one call to user 2 but did not receive any calls.

Using the information obtained from connection graph 300, some valuable system information regarding network 204 can be determined. For example, from graph 300, we learn that user 2 communicated with the most other users (4) while user 5 communicated with the fewest (1).

Although connection graph 300 gives some useful information about the telephone call pathways used between users 1-5 during the time period, the information from connection graph 300 may yield an incomplete picture. For example, while each of the pathways 304 of connection graph 300 may indicate which user pairs had one or more telephone calls between them, the pathways 304 do not indicate any other information regarding the telephone calls, such as the number of telephone calls that occurred between the users, who initiated the calls, the duration of the calls, etc. In other words, the connection and/or communication pathways do not give any information regarding the relative strength of the pathways between adjacent users.

To take into account this type of information, a graph structure can be extended by assigning a weight to each edge of the graph. Graphs with edge weights, or weighted graphs, are used to represent structures in which pairwise connections have some numerical values. A higher weight for an edge generally signifies a stronger relationship between the two adjacent vertices. The edge weight can be determined based on any measure that yields a relative strength of the edge with respect to the other edges in the graph.

Figure 3B is a graphical representation of a connection graph 310 of the network 204 in which the edge lines 304 of connection graph 300 have been replaced with edge arcs 314. Each edge arc 314 represents a communication and/or communication pathway that occurred between users in a particular direction. In the embodiment shown, the pathways again represent the information disclosed in Table 1, above. Each edge line that indicated bidirectional calls in connection graph 300, (e.g., edge line 314a of Figure 3A) has been replaced in connection graph 310 with a pair of edge arcs 314, one for each direction (e.g., edge arcs 314a-1 and 314a-2).

Each edge arc 314 also includes a weight, shown in parentheses. For example, the weights of edge arcs 314a-1 and 314a-2 are 3 and 4, respectively. For this embodiment, each of the edge weights represents the number of calls made in the particular direction between the adjacent users using the particular pathway. Thus, a higher edge weight reflects more calls made between the adjacent users and thus represents a stronger relative connection. As such, in addition to the information obtainable from connection graph 300, connection graph 310 can also be used to determine the strength of the connection and/or communication pathway relationship between any two users of system 204.

For example, using graph 310 of Figure 3B, one can determine that user 1 made three calls to user 2 and two calls to user 3, and received four calls from user 2 and one call from user 3. Similar determinations can be made regarding the rest of the users. This gives a more accurate picture than graph 300 regarding the strength of the interactions between users 1-5 of network 204 during the time period with respect to mobile telephone calls. For example, using only connection graph 300, it appears that user 5 was the least active user during the time period because user 5 has only one pathway in graph 300. However, connection graph 310 reveals that while user 5 only made telephone calls to one other user (user 2), user 5 made five telephone calls to that one other user, which is just one call fewer than user 2, which made the most calls during the time period. Thus, the pathway from user 5 to user 2 is strong relative to the other pathways in network 204.

As noted above, although physical graphs can be used to show data used in graph theory, the physical graphs are not the "graphs" identified in graph theory; the term "graphs" refer to networks rather than visual charts. That is, the "graphs" of graph theory are mathematical structures. These mathematical structures can be represented in many ways, only one of which is physical graphs. Other types of data structures can also be used that correlate the data between the particular vertices. For example, the data corresponding to network 204 can be stored in structured tables in one or more databases. Other types of data structures that correlate the information with respect to the particular users (graph vertices) and corresponding pathways (graph edges) of network 204 can also be used, as is known by one skilled in the art of graph theory.

In addition, although connection graphs 300 and 310 represent past usage of network 204, it will be appreciated that connection graphs 300 and 310 can be used in a real-time fashion to represent past and/or current usage of network 204. That is, each connection graph can be updated in real-time to reflect usage as it occurs on the network. This can be helpful to determine information flow "on-the-fly" and to react accordingly, such as, e.g., to allocate more resources to a particular user when that user is seen to be communicating with many other users.

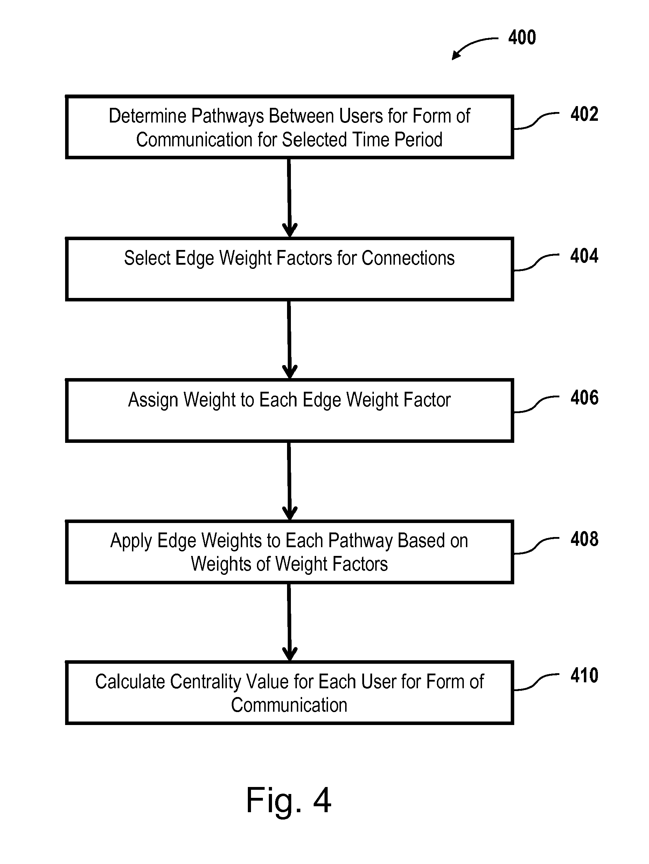

Figure 4 discloses one method of determining a centrality value for each user in a single dimension (i.e., for a single form of communication) in a given network. As with the discussion above, values from exemplary network 204 will be used and reference will be made to the connection graphs shown in Figures 3A and 3B to aid in the discussion. However, exemplary network 204 and the corresponding connection graphs in Figures 3A and 3B are examples only and not to be limiting of the methods discussed herein.

In step 402, connection and/or communication pathways between users are determined. To do so, a desired time period for the connection graph is first selected. For example, the desired time period can be any time period measured in seconds, minutes, hours, days, months or even years. The time period can be contiguous or non-contiguous (i.e., comprised of multiple sub-time periods). An example of a contiguous time period is two months (e.g., all calls made in the past two months). An example of a non-contiguous time period is a particular sub time-period each day for a particular amount of time (e.g., all calls made between 6 pm and 9 pm on every weekday evening for the past two months). Of course, the above are only examples of time periods that can be used; any other contiguous or non-contiguous time period can also be used.

Once the time period has been selected, all connection and/or communication pathways between users during that time period are determined for the form of communication, as discussed above. A graph can then be generated using the vertices to represent the users and the edges to represent the pathways, as shown in Figures 3A and 3B. The number of vertices (i.e., users) in the single-dimension connection graph can vary, depending on the size of the network, the information desired, the selected time period, etc. For exemplary network 204, pathways between each user 202 determined in step 402 for a particular time period yielded the connection graph 300 shown in Figure 3A, as discussed above.

In step 404, edge weight factors can be selected for the pathways to accurately reflect relative strengths of the pathways with respect to each other. By way of example, and not limitation, some factors that can be used to determine the weight for each edge with respect to telephone calls can include: the number of calls between users, the duration of the calls, the time of day the calls were made, the day of the week the calls were made, the amount of time that elapsed before another call was made by the same user, etc. In network 204, discussed above, the number of calls between users was selected as the sole edge weight factor.

In step 406, once the edge weight factors have been selected, weights can be assigned to each edge weight factor based on the relative value of the edge weight factors with respect to each other. For example, if two edge weight factors are selected (e.g., the number of calls and the duration of the calls) and it is determined that both edge weight factors equally impact the edge, then both factors can be assigned the same weight, e.g., 20% & 20% or 50% & 50% (Note that the weights do not have to add up to 100%). In addition, one or more of the weights can be variable or represented in a formula. For example if it is determined that as the number of phone calls increase, the relative importance of each call diminishes, then the weight assigned can be a formula wherein the diminishing value is taken into account. In the sample network 204, discussed above, only a single edge weight factor was used; therefore all of the weight was assigned to the one edge weight factor.

The edge weight factors and the associated weights can be stored in a database or other data structure. In addition, user values for each edge weight factor, along with any other information related to the network or system, can be stored in one or more databases or any other data structure(s) tied to the connection graph.

In step 408, the weighted edge weight factors can be applied to each pathway in the connection graph. This allows the pathways in the connection graph to each receive a numerical value that can be compared with the other pathways in the connection graph. For network 204, applying weights to each connection based on the selected weight factor (number of calls) yielded the edge weight values of connection graph 310 shown in Figure 3B, as explained above.

In step 410, once the edge weight factors have been applied to each pathway so as to assign a numerical value to the pathway, a centrality value can be determined for each user. Generally, higher centrality of a vertex in a graph signifies a greater measure of importance and reach.

If a less-accurate value is all that is needed, the centrality value $CV$ for each user can be determined without using edge weights. In one embodiment, the centrality value of a user can be equated to the number of adjacent users corresponding to the particular user (i.e., the number of users with which the particular user communicated). For example, using graph 300, the centrality value of each user in exemplary network 204 is reflected in Table 2, below, according to this manner of centrality derivation.

Table 2.

| User | CV |
|---|---|
| User 1 | 2 |
| User 2 | 4 |
| User 3 | 3 |
| User 4 | 2 |
| User 5 | 1 |

As can be seen by Table 2, above, user 2 has the highest centrality value when using this manner of centrality derivation. In some embodiments, this can signify that user 2 has more importance and/or reach, signifying that information that flows through user 2 may spread more quickly through the network. This can help to more efficiently enter information into the network. For example, because user 2 has the greatest centrality value, introducing information through user 2 may produce the most efficient flow of information through the network. However, in many cases this manner of centrality derivation is not accurate enough because it does not take into account the relative strength of the connection and/or communication pathways.

Therefore, in other embodiments, the centrality value $CV$ is determined while taking into account the weighted values of the pathway arcs 314. In one embodiment, the centrality value of a user can be a function of the number of adjacent vertices and/or the weights of all of the pathways associated with the user. For example, the centrality value $CV$ can be equated to the sum of the weights of all of the pathways associated with the user. As an example, referring to Figure 3B, user 1 initiated three calls to user 2 and two calls to user 3 during the particular time period and received four calls from user 2 and one call from user 3. Thus, the weighted communication pathway values corresponding to user 1 are 3, 2, 4, and 1. Summing the weighted values (3+2+4+1) yields a centrality value for user 1 of 10. The centrality value of each user in exemplary network 204 is reflected in Table 3, below, according to this manner of centrality derivation.

Table 3.

| User | CV |
|---|---|
| User 1 | 10 |
| User 2 | 17 |
| User 3 | 6 |
| User 4 | 4 |
| User 5 | 5 |

In another embodiment, the centrality value $CV$ of a user can be a function of the weights of adjacent incoming or outgoing pathways associated with the user. For example, the centrality value $CV$ can be equated to the sum of the weights of only the outgoing pathways associated with the user. As an example, again referring to Figure 3B, user 1 initiated three calls to user 2 and two calls to user 3 during the particular time period. Thus, the weighted outgoing pathway values corresponding to user 1 are 3 and 2. Summing the weighted values (3+2) yields a centrality score for user 1 of 5. The centrality value of each user in exemplary network 204 is reflected in Table 4, below, according to this manner of centrality derivation.

Table 4.

| User | CV |
|------|----|
| User 1 | 5 |
| User 2 | 6 |
| User 3 | 3 |
| User 4 | 2 |
| User 5 | 5 |

This measurement approach may be especially useful when determining how to disseminate information because the outgoing pathways may more accurately reflect the relative strengths of the users in passing information on to other users.

Centrality values determined by the above three manners can be used to help determine efficient information flow through the network. One would likely select user 2 (if only one user was selected) for dissemination of information into network 204 regardless of the manner used because user 2 has the highest value in each of the manners. However, network 204 is exemplary only and only includes five users; in other networks the same user may not have the highest centrality values using each manner.

In some embodiments, the centrality value $CV$ for each user can also take into account the importance of the other users to which the user is connected. In this approach, connections to high-scoring users contribute more to the value than connections to low-scoring users. In one embodiment, a hub centrality value for a number of users $n$ can be equated to the eigenvector x corresponding to the largest eigenvalue in the formula:

$$(A*A^{\mathrm{T}})x = \lambda x \qquad\qquad (\text{eq. 1})$$

where
$x = (x_1, x_2, ..., x_n)$, and $x_i$ is the centrality value $CV$ of the $i^{\text{th}}$ user ($i$ = 1, 2, ..., $n$);
T represents the transpose operator; and
$A$ represents an $n$ by $n$ adjacency matrix, which can be calculated for both binary and non-binary cases.

For the binary case, $A_{ij}$ = 1 if, during a predefined time period, there was at least one communication from user $i$ to user $j$. The communication can include a telephone call, an email message, an SMS message, a Voice Over IP (VOIP) call, such as Skype, a checking of $i$'s Facebook or Twitter posts or updates by user $j$, etc. If there was not at least one communication from user $i$ to user $j$, $A_{ij}$=0 .

For the non-binary case, $A_{ij}$ = $p$ if, for example, during a predefined time period, there were p communications from user $i$ to user $j$. Alternatively, or in conjunction, p can be equated to the total number of minutes in a telephone or VOIP call and/or the number of lines in an email or SMS message and/or the amount of time spent checking updates on Facebook or Twitter profiles, etc. Otherwise, $A_{ij}$ = 0. In general, parameter $p$ can be a function of some or all communications and their attributes from user $i$ to user $j$.

In another embodiment, an authority centrality value for a number of users n can be equated to the eigenvector $y$ corresponding to the largest eigenvalue in the formula:

$$(A^{\mathrm{T}}*A)y = \lambda_1 y \qquad\qquad (\text{eq. 2})$$

where
$y = (y_1, y_2, ..., y_n)$, and $y_i$ is the centrality value $CV$ of the $i^{th}$ user ($i$ = 1, 2, ..., $n$).

In another embodiment, a centrality value can be determined which is similar by its properties and general idea to an Internet Page Rank parameter. For example, the centrality value for a number of users $n$ can be equated to the eigenvector z corresponding to the eigenvalue 1 in the formula:

$$N^{\mathrm{T}}z = z \qquad\qquad\text{(eq. 3)}$$

where
$z = (z_1, z_2, ..., z_n)$, and $z_i$ is the centrality value *CV* of the $i^{\text{th}}$ user ($i = 1, 2, ..., n$);
**N** represents an *n* by *n* matrix.
In matrix **N,**

$$N_{ij} = sL_{ij} + (1-s)/n \qquad\qquad\text{(eq. 4)}$$

where
$0 < s < 1$ is a parameter of choice; and
**L** represents an *n* by *n* matrix

The values of matrix **L** can be represented as $L_{ij} = 0$, if, during a predefined time period, there were no communications from user *i* to user *j*, as discussed above. Otherwise $L_{ij} = 1/m_i$, where $m_i$ is the number of users who user *i* contacted (i.e., communicated) during the predefined time period. In general, $L_{ij}$ can be a function of $m_i$ and the attributes of communications from user *i* to other users.

In another embodiment, the centrality value for a number of users *n* can be defined similar to a betweenness centrality, which reflects a topological position of a user within the graph of all users, and which represents a total amount of flow carried in the graph.

In another embodiment, the centrality value for a number of users *n* can be defined as closeness centrality. In this case a user can be considered "important" if the user is relatively close to all other actors. Closeness can be based on the inverse of the distance of each user to every other user in the network.

The manners of determining centrality values discussed above are merely examples. It will be appreciated that other manners of determining centrality values can also be used. For example, although the description herein of the centrality value of the user is generally based on a degree centrality or its variations, it should be appreciated by one skilled in the art that other centrality values determined by other methods can alternatively be used for optimization of information flow in a similar fashion.

Although the steps of method 400 have been presented in a particular order, it will be appreciated that other orders of steps are also possible or that one or more of the steps may be omitted. For example, the steps of selecting edge weight factors (step 404) and assigning a weight to each edge weight factor (step 406) can be performed before determining the pathways between users (step 402), if desired. Furthermore, once the edge weight factors have been selected for the form of communication, those same edge weight factors can be used for later analysis of the same or another network and step 404 can be omitted in the later uses of the method. Other omissions or changes in step order may also be possible.

As noted above, the method 400 of determining centrality values discussed above is directed to a single form of communication, such as, e.g., mobile telephone calls. As discussed above, however, there are many forms of communication that exist in today's world for the flow of information between users. As such, a single-dimension connection graph that only takes into account one of these forms of communication between users does not give a complete picture of all of the communications occurring between the users. For example, a single-dimension connection graph showing only mobile telephone calls, as in the example discussed above, would not take into account land-line telephone calls, emails, text messages, instant messages, internet communication applications, such as those discussed above, etc.

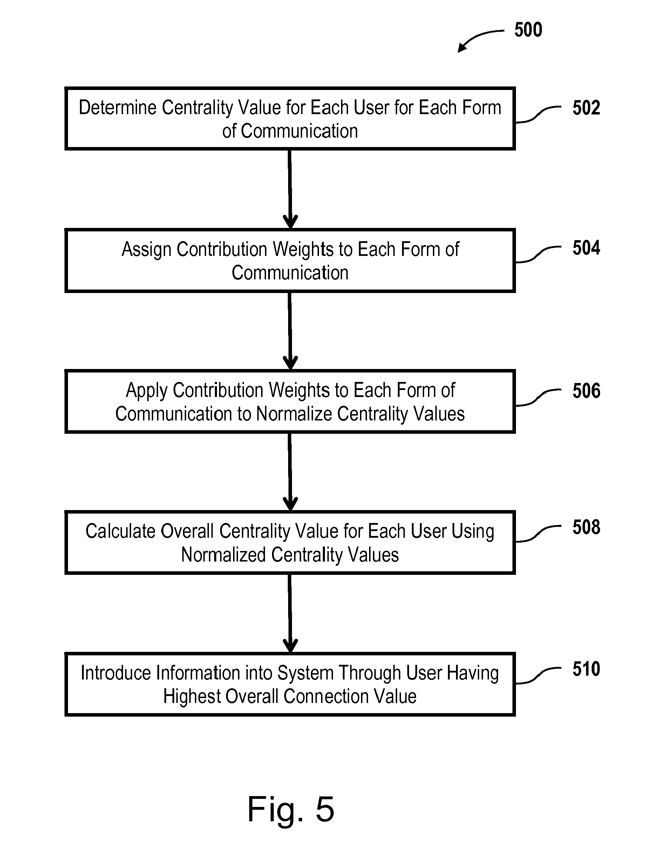

Figure 5 discloses one embodiment of a method 500 of optimizing information flow in a multi-dimensional system that can be used to reflect a complete picture regarding the overall communications in each dimension with respect to each user.

In step 502, a separate centrality value can be determined for each user for each form of communication. To do this, separate single-dimension connection graphs corresponding to each form of communication can be generated. That is, a separate single-dimension connection graph can be generated corresponding to each of land-line telephone calls, emails, text messages, and instant messages. Separate single-dimension connection graphs can also be generated corresponding to each internet application, such as Facebook™, Twitter™, and those that use Voice Over Internet Protocol (VOIP) (e.g., Skype™).

Each single-dimension connection graph and corresponding centrality values can be generated using method 400, discussed above, or using any other desired method. Each single-dimension connection graph may use the same or different edge weight factors as each other. Similarly, assigned edge weights for each single-dimension connection graph can be the same or different from each other. In essence, each single-dimension connection graph can be generated without regard to any of the other single-dimension connection graphs, if desired.

By way of example, and not limitation, Table 5, below, lists a number of edge weight factors that can be used alone or in conjunction with each other and the forms of communication to which each factor may be applied. Of course other edge weight factors are also possible.

Table 5.

| Factor | Land-line Phone | Mobile Phone | Email | Text Message | Instant Message | Facebook™ | Twitter™ | VOIP |
|---|---|---|---|---|---|---|---|---|
| Number of communications initiated | ✔ | ✔ | ✔ | ✔ | ✔ | ✔ | ✔ | ✔ |
| Number of communications received | ✔ | ✔ | ✔ | ✔ | ✔ | ✔ | ✔ | ✔ |
| Total number of communications | ✔ | ✔ | ✔ | ✔ | ✔ | ✔ | ✔ | ✔ |
| Duration of communication | ✔ | ✔ | | | | | | ✔ |
| Time of day of communication | ✔ | ✔ | ✔ | ✔ | ✔ | ✔ | ✔ | ✔ |
| Day of week of communication | ✔ | ✔ | ✔ | ✔ | ✔ | ✔ | ✔ | ✔ |
| Length of time until further communication initiated | ✔ | ✔ | ✔ | ✔ | ✔ | ✔ | ✔ | ✔ |
| Number of lines of text in communication | | | ✔ | ✔ | ✔ | ✔ | ✔ | |
| Size of communication | | | ✔ | ✔ | ✔ | ✔ | ✔ | |

To provide an example, sample network 204, discussed above, can be expanded to include, e.g., emails and text messages, with the sample data shown in Table 6, below.

Table 6.

| User | Mobile calls | Emails | Text messages |
|---|---|---|---|
| User 1 → User 2 | 3 | 1 | 0 |
| User 1 → User 3 | 2 | 1 | 10 |
| User 1 → User 4 | 0 | 1 | 6 |
| User 2 → User 1 | 4 | 1 | 0 |
| User 2 → User 3 | 1 | 0 | 0 |
| User 2 → User 4 | 1 | 0 | 0 |
| User 3 → User 1 | 1 | 1 | 13 |
| User 3 → User 2 | 1 | 0 | 0 |
| User 3 → User 4 | 1 | 0 | 0 |
| User 4 → User 1 | 0 | 0 | 6 |
| User 4 → User 2 | 2 | 1 | 0 |
| User 4 → User 3 | 0 | 0 | 1 |
| User 4 → User 5 | 0 | 0 | 1 |
| User 5 → User 2 | 5 | 0 | 13 |
| User 5 → User 4 | 0 | 1 | 1 |

Using the sample data of Table 6, above, and selecting the number of email and text message communications initiated and received to be the edge weights respectively for the emails and text messages, the centrality values shown in Table 7, below, are determined by using the steps of method 400 for each form of communication.

Table 7.

| User | Mobile calls *CV* | Emails *CV* | Text messages *CV* |
|---|---|---|---|
| User 1 | 10 | 5 | 35 |
| User 2 | 17 | 3 | 13 |
| User 3 | 6 | 2 | 24 |
| User 4 | 4 | 3 | 15 |
| User 5 | 5 | 1 | 15 |

Once all of the single-dimension connection graphs have been generated for each form of communication in the expanded network and the centrality value of each user has been determined for each of the single-dimension connection graphs, the information from the single-dimension connection graphs can be combined to determine an overall picture regarding the overall communications with respect to each user.

In step 504, contribution weights for each form of communication can be assigned. The contribution weights can be used to normalize values between forms of communication. That is, contribution weights can be applied to each form of communication based on the overall strength or contribution of the particular form of communication to the overall total. The contribution weights can be determined empirically, or by using a formula, or by any other means. By normalizing the values obtained from the different forms of communication, the values can be combined or compared with each other to accurately reflect the overall communication picture.

For example, it might be determined in the expanded network 204 that email communications and text messages respectively represent stronger and weaker forms of communication than mobile calls. Based on this the contribution weights for mobile calls, emails, and text messages, respectively, may be assigned in step 504 to be 1.0, 2.5, and 0.3. This signifies that in this example, the email centrality values are worth 2.5 times more than the centrality values from mobile calls and the centrality values from text messages are worth 0.3 times as much.

In step 506, the contribution weights can be applied to the applicable form of communication to normalize centrality values between forms of communication. To do this, the contribution weight corresponding to the form of communication can be applied to the centrality values corresponding to each user of the form of communication to obtain a normalized centrality value for the user. For example, for the expanded network 204, presented above, the normalized centrality values shown in Table 8, below, are obtained using 1.0, 2.5, and 0.3 respectively as the form weights for mobile calls, emails, and text messages.

Table 8.

| User | Mobile calls $CV_{Normalized}$ | Emails $CV_{Normalized}$ | Text messages $CV_{Normalized}$ |
|---|---|---|---|
| User 1 | 10.0 | 12.5 | 10.5 |
| User 2 | 17.0 | 7.5 | 3.9 |
| User 3 | 6.0 | 5.0 | 7.2 |
| User 4 | 4.0 | 7.5 | 4.5 |
| User 5 | 5.0 | 2.5 | 4.5 |

In step 508, an overall centrality value (*OCV*) for each user can be determined using the normalized centrality values. In one embodiment, this is done by aggregating or summing up the normalized centrality values corresponding to the user from each of the forms of communication.

Using the example weighted centrality values obtained in step 506 and shown in Table 8, above, the overall centrality values shown in Table 9, below, are obtained for users 1-5 of expanded network 204 using the aggregation approach.

Table 9.

| User | OCV |
|------|-----|
| User 1 | 33.0 |
| User 2 | 28.4 |
| User 3 | 18.2 |
| User 4 | 16.0 |
| User 5 | 12.0 |

The overall centrality values can allow objective comparisons to be made between users with respect to the overall communication connections. For example, the overall centrality values determined in step 508 can be compared to each other to objectively determine which user had the highest communication value, the lowest communication value, etc. during the time period in which the data was obtained. In the example expanded network 204, presented above, user 1 had the highest OCV (33.0) while user 5 had the lowest (12.0), as shown in Table 9, above. As such, it can be said that user 1 and user 5 respectively had the highest and lowest communication values in the network during the particular time period and in a particular space (i.e., time and space). That is, user 1 may have been the best user at disseminating information through network 204 and user 5 may have been the worst.

One should keep in mind, however, that the overall centrality value as described might not apply for specific communication connections and/or methods. For example, if a user has a high OCV, it does not imply that that user has a high centrality value for each communication channel. Thus, the user may not be the best person to contact for a particular communication channel.

In step 510, information can be introduced into the system through the user having the highest overall centrality value to optimize the flow of the information through the system. For example, in the expanded network 204, the information would be introduced through user 1, which has the highest OCV.

This approach can be useful for an advertiser or other entity trying to disseminate information throughout a system having more than one form of communication. The advertiser or other entity can focus on communicating the information through the user having the highest OCV value to provide the best option for efficiently disseminating the information. That is, the information can be inserted into the network through the user having the highest overall centrality value (i.e., user 1) so that the information will most efficiently flow through the network. This can be done, e.g., by electronically sending the information to the particular user using the forms of communication.

Not only does incorporating normalized values allow each form of communication to be effectively incorporated into the overall centrality value for each user, but it also allows objective comparisons to be made between the different forms of communication. For example, using the example values obtained in step 506 (see Table 8, above), it can be said that user 2's use of mobile calls is stronger than user 1's use of emails based on the corresponding weighted centrality values. This can signify that information may disseminate faster through expanded network 204 when sent by mobile call through user 2 than by email through user 1.

Furthermore, by summing the normalized centrality values for each form of communication, a total normalized centrality value can be obtained for the form as a whole. For example, using the values in Table 8, above, total normalized form centrality values of 42.0, 35.0, and 30.6 are respectively obtained for mobile calls, emails, and text messages of expanded network 204. This can signify that, in general, using mobile calls is the most effective way to disseminate information in expanded network 204 and using text messages is the least effective. Again, this may be useful for an advertiser or other entity trying to disseminate information throughout expanded network 204.

In an alternative embodiment, instead of introducing information into the system through a single user across all forms of communication based on the overall centrality value, information can be introduced into the system through one or more users, the information being introduced in each form of communication based on the centralized value for that particular form of communication. In this embodiment, determination of overall centrality values is not required. Normalization of centrality values corresponding to each form of communication are also not required.

For example, as shown in Table 7, above, user 2 had the highest centrality value for mobile calls in network 204 and user 1 had the highest centrality values for emails and text messages. Under this alternative embodiment, the information would be introduced into network 204 via mobile calls through user 2, via email through user 1, and via text message through user 1 to optimize the flow of the information through the system.

As such, to provide a best option for disseminating information through expanded network 204, an advertiser or other entity may want to focus on communicating the information through user 2 via mobile calls and through user 1 via emails and text messages. That is, the information can be inserted into each form of communication through the respective user having the highest centrality value for that form of communication so that the information will most efficiently flow through the network.

Table 10, below, shows the various weights and centrality values associated with the different forms of communication of expanded network 204, obtained through the various steps of method 500. Table 10 can provide a wealth of information regarding the information flow in expanded network 204. Table 10 can also be modified for use in other networks to include more or less users, more or less forms of communication, and other desired information. In more practical applications, more users, perhaps hundreds, thousands, or even more, are likely to be included in the information flow determination of a network. In those applications, a table, such as Table 10, may not be practical. In those cases, one or more databases can be used to store and make available the generated data.

Table 10.

| User | Mobile calls | | | Emails | | | Text messages | | | OCV |
|---|---|---|---|---|---|---|---|---|---|---|
| | CV | w | $CV_w$ | CV | w | $CV_w$ | CV | w | $CV_w$ | |
| User 1 | 10 | 1.0 | 10.0 | 5 | 2.5 | 12.5 | 35 | 0.3 | 10.5 | 33.0 |
| User 2 | 17 | 1.0 | 17.0 | 3 | 2.5 | 7.5 | 13 | 0.3 | 3.9 | 28.4 |
| User 3 | 6 | 1.0 | 6.0 | 2 | 2.5 | 5.0 | 24 | 0.3 | 7.2 | 18.2 |
| User 4 | 4 | 1.0 | 4.0 | 3 | 2.5 | 7.5 | 15 | 0.3 | 4.5 | 16.0 |
| User 5 | 5 | 1.0 | 5.0 | 1 | 2.5 | 2.5 | 15 | 0.3 | 4.5 | 12.0 |
| TOTAL | | | 42.0 | | | 35.0 | | | 30.6 | |

Although the steps of method 500 have been presented in a particular order, it will be appreciated that other orders of steps are also possible or that one or more of the steps may be omitted. For example, the step of assigning form weights to each form of communication (step 504) can be performed before determining the centrality values for each user in each form of communication (step 502), if desired. Furthermore, once the form weights have been assigned to each form of communication, those same form weights can be used for later analysis of the same or another network, and step 504 can be omitted in the later uses of the method. Other omissions or changes in step order may also be possible.

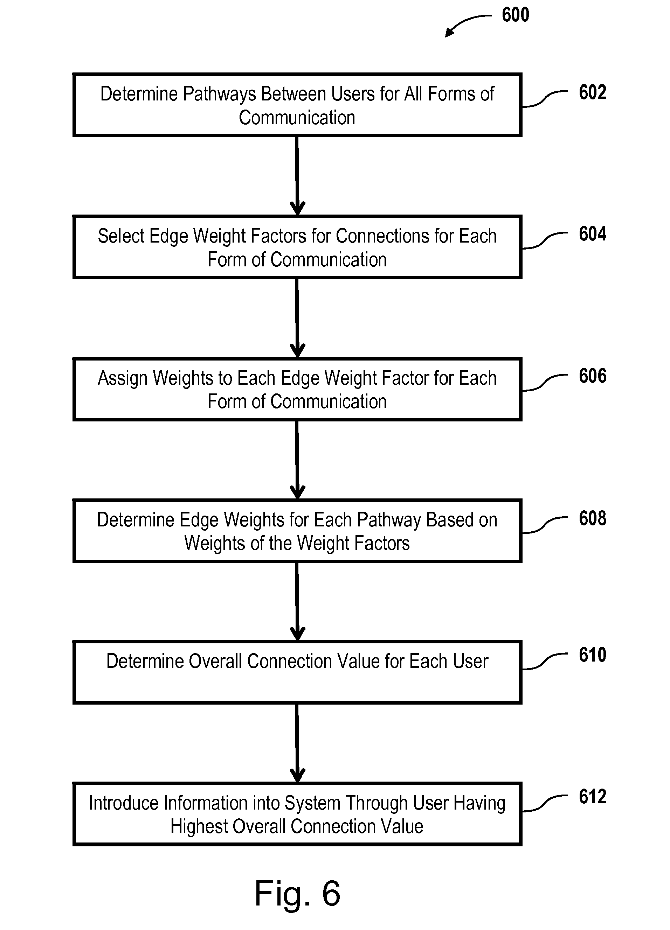

If desired, the overall centrality value for each user can be determined without first determining separate centrality values for each user for each form of communication. For example, Figure 6 discloses another embodiment of a method 600 of optimizing information flow in a multi-dimensional system that can be used to reflect a complete picture regarding the overall communications in each dimension with respect to each user. Using method 600, a multi-dimensional connection graph is generated for the network that includes information relating to all of the different forms of communication in the network.

In step 602, all pathways between users in all of the forms of communication are determined for the particular time period. This is done in a similar manner to step 402, discussed above, except that instead of only determining the pathways for a single form of communication, the pathways for all of the forms of communication are determined between users.

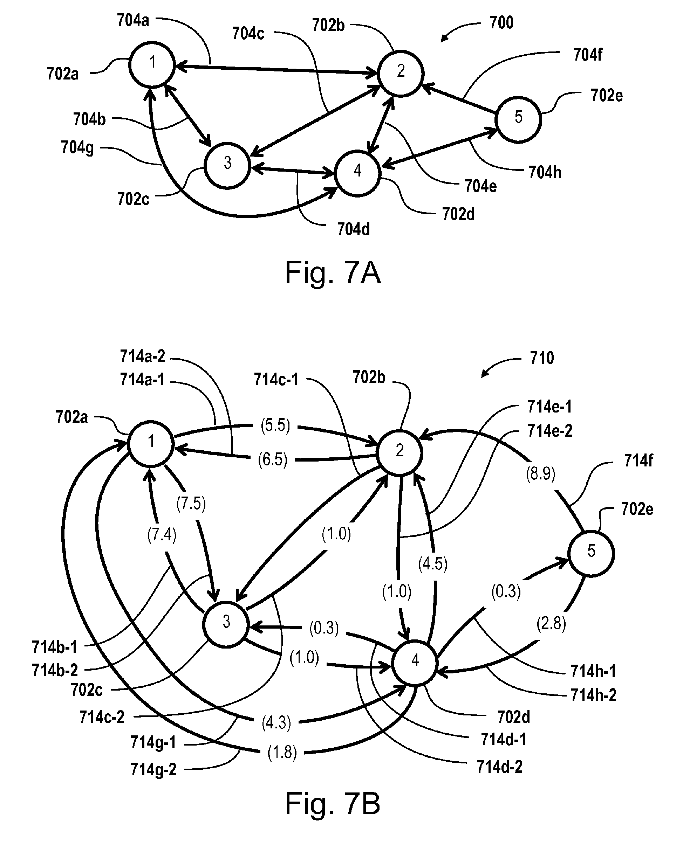

For example, Figure 7A is a graphical representation of a multidimensional connection graph 700 of the expanded network 204, discussed above, showing the connection and/or communication pathways used for all of the forms of communication (mobile phone calls, emails, and text messages) during the selected time period. Similar to single-dimensional connection graph 300 of Figure 3A, multidimensional connection graph 700 has five vertices 702 (702a-702e), respectively representing the five users 202a-202e of Figure 2, and a number of edges 704 (704a-704h), representing the pathways between pairs of users. As noted above, however, edges 704 are representative of all forms of communication between the user pairs, not just mobile phone calls. In multidimensional connection graph 700, no distinction has been made in edges 704 between the different forms of communication.

In step 604, edge weight factors can be selected for the pathways to accurately reflect relative values of the pathways with respect to each other. The selected edge weight factors can include factors related to any or all of the forms of communication. For example, the selected factors can include one or more of the factors shown in Table 1, above. Of course, other factors can also be used. In exemplary expanded network 204, the selected factors were the number of mobile phone calls, the number of emails, and the number of text messages, as discussed above.

In step 606, edge weights can be assigned to each of the edge weight factors for each form of communication, based on the relative value of each factor with respect to the other factors. This can be done in a similar manner to that discussed above. In addition, because all of the forms of communication are considered in the same multidimensional connection graph, each edge weight factor may be assigned multiple weights, up to the number of different forms of communication being considered. Also, the relative weighting between the forms of communication can be taken into account when assigning weights to the edge weight factors to normalize the edge weight values.

In step 608, the edge weights can be applied to each pathway in the connection graph to determine an overall weighted pathway value, using the edge weight factors and associated weights for each form of communication. This can be done in three steps, if desired. First, the edge weight value for each form of communication can be determined by applying an edge weight to the pathway in the manner discussed above. Second, the portion of each edge weight contribution to the total edge weight value can be determined. Third, the total edge weight value can be determined by summing up each of the edge weight portions for each form of communication. This corresponds to the overall weighted pathway value for the pathway.

For example, if the number of mobile calls, emails, and text messages sent from user 1 to user 3 in expanded network 204 are 2, 1, and 10, respectively, and if the weights for each form are the number of mobile calls, emails, and text messages, respectively, and if the portion weights for each form of communication is determined to be 1, 2.5, and 0.3, then the overall weighted pathway value corresponding to the communication pathway from user 1 to user 3 can be determined in the three steps as follows.

Step 1: determination of edge weight for each form of communication:

$$\text{mobile calls: (2 mobile calls)*(1 weight)} = 2$$

$$\text{emails: (1 email)*(1 weight)} = 1$$

$$\text{text messages: (10 text messages)*(1 weight)} = 10$$

Step 2: determination of portion of each edge weight contribution to the total edge weight:

$$\text{mobile calls: (2 edge weight)*(1.0 portion weight)} = 2.0$$

$$\text{emails: (1 edge weight)*(2.5 portion weight)} = 2.5$$

$$\text{text messages: (10 edge weight)*(0.3 portion weight)} = 3.0$$

Step 3: determination of total edge weight:

$$\text{2.0 (mobile calls portion)} + \text{2.5 (email portion)} + \text{3.0 (text messages portion)} =$$

$$7.5$$

Applying this three step process to each of the edge arcs corresponding to expanded network 204 yields the results shown in Table 11, below.

Table 11.

| User | Overall Weighted Pathway Value |
|---|---|
| User 1 → User 2 | 5.5 |
| User 1 → User 3 | 7.5 |
| User 1 → User 4 | 4.3 |
| User 2 → User 1 | 6.5 |
| User 2 → User 3 | 1.0 |
| User 2 → User 4 | 1.0 |
| User 3 → User 1 | 7.4 |

(continued)

| User | Overall Weighted Pathway Value |
|---|---|
| User 3 → User 2 | 1.0 |
| User 3 → User 4 | 1.0 |
| User 4 → User 1 | 1.8 |
| User 4 → User 2 | 4.5 |
| User 4 → User 3 | 0.3 |
| User 4 → User 5 | 0.3 |
| User 5 → User 2 | 8.9 |
| User 5 → User 4 | 2.8 |

If desired, the three step process can be combined into a single step, wherein the overall weighted pathway value is determined using a single equation that determines the edge weights for each form of communication and the portion of each edge weight contribution as portions of the equation.

Figure 7B is a graphical representation of a multidimensional connection graph 710 of the expanded network 204 in which the edge lines 704 of connection graph 700 have been replaced with edge arcs 714, and the values of Table 11, above, have been applied to the edge arcs 714 to obtain the corresponding weights displayed in parentheses.

In step 610, the overall centrality value ($OCV$) for each user can be determined using the weighted values for each pathway associated with the user. In one embodiment, this is done by aggregating or summing up the weighted scores.

For example, referring to Figure 7B, six directional pathways are associated with user 1. Therefore, the overall centrality value for user 1 can be determined by using the weighted values of each of those pathways, as follows:

$$OCV_{\text{user 1}} = 5.5 + 6.5 + 7.5 + 7.4 + 4.3 + 1.8 = 33.0$$

Thus, the overall centrality value for user 1 is 33.0 using this multidimensional approach. Using the same summation method of determination, the overall centrality values for users 2-5 are respectively 28.4, 18.2, 16.0, and 12.0. These values are equal to the overall centrality values obtained using method 500, discussed above, as would be expected when using the same values. The comparison is shown in Table 12, below.

Table 12.

| User | $OCV$ using method 500 | $OCV$ using method 600 |
|---|---|---|
| User 1 | 33.0 | 33.0 |
| User 2 | 28.4 | 28.4 |
| User 3 | 18.2 | 18.2 |
| User 4 | 16.0 | 16.0 |
| User 5 | 12.0 | 12.0 |

In step 612, information can be introduced into the system through the user having the highest overall centrality value to optimize the flow of the information through the system, as discussed above. For example, in the expanded network 204, the information would be introduced through user 1, which has the highest $OCV$.

Although the steps of method 600 have been presented in a particular order, it will be appreciated that other orders of steps are also possible or that one or more of the steps may be omitted. For example, the steps of selecting edge weight factors (step 604) and assigning weights to each edge weight factor (step 606) can be performed before determining the pathways between users (step 602), if desired. Furthermore, once the edge weight factors have been selected, those same edge weight factors can be used for later analysis of the same or another network, and step 604 can be omitted in the later uses of the method. Other omissions or changes in step order may also be possible.

In the methods discussed above, the example network 204 included only five users and the pathways were easy to determine. As discussed above, this was to simplify the discussion relating to the methods. However, in more practical real-world applications, many more users, perhaps hundreds, thousands, or even more, are likely to be included in the information flow determination of a network, with the data required to determine the pathways possibly being unstructured and stored in many different databases.

A graphical representation of the pathways for that many users would be difficult, if not impossible, to generate. However, because graph theory does not require a graphical representation, one would not have to be generated. Thus, because the methods above are based on graph theory, any of the methods discussed above can be used with any number of users. As such, those methods can be used in practical real-world applications having hundreds or thousands or more users. In those cases, one or more databases or other computer data structures can be used to store and make available the connection graph data.

Furthermore, even if the data required for the determination of the pathways is unstructured and/or stored in various databases, the data can be obtained using one or more computer applications to be used with the methods discussed herein.

In the embodiments discussed above, the vertices and pathways of the graphs respectively represent users and communication links in a communication system. In other embodiments the vertices and pathways can represent other items to help increase information flow efficiency. For example, in one embodiment the vertices of the graph can represent web pages of a web site or other end points which can be used for communication purposes and the pathways can represent users' movements from one web page to another while browsing. The information flow can then be equated to the downloading of web pages from the web site as users are moving between pages. Using graph theory, this information flow can be optimized for efficiency in a manner somewhat similar to that discussed above with respect to method 400.

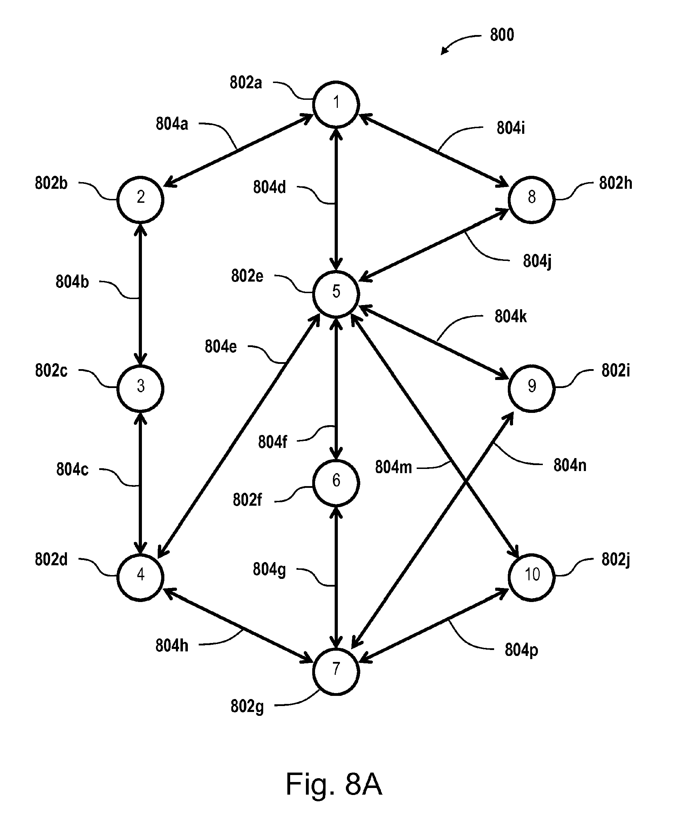

For example, Figure 8A is a graphical representation of a connection graph 800 representing web pages for a sample web site and users' movements between the pages in a particular time period.

Connection graph 800 has ten vertices 802 (802a-802j), which respectively represent ten web pages for the sample web site and fourteen edges 804 (804a-804p) which represent links available between the web pages. All of the links are bidirectional because the user can choose to "go back" to a previous web page from any of the web pages. In graph 800, vertex 802a represents the home web page (i.e., landing page) for the web site.

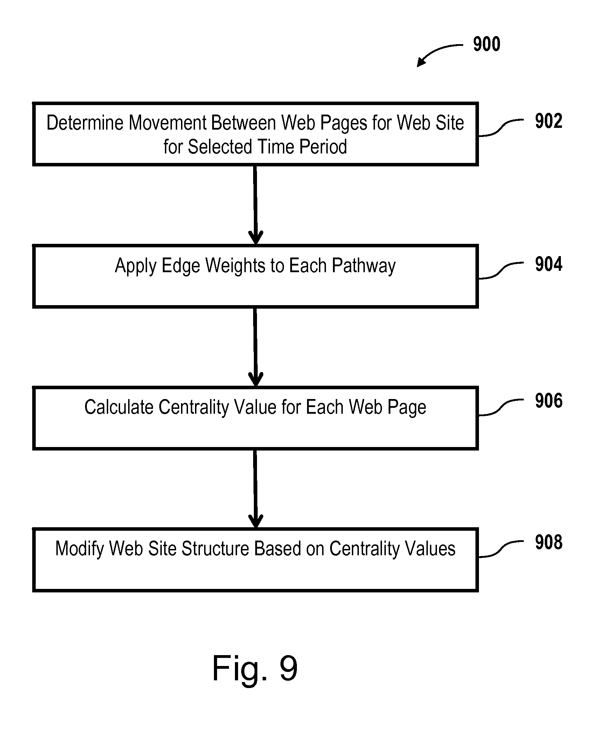

Figure 9 discloses one method of optimizing information flow in a web site. To aid in the discussion, the sample web site represented by Figure 8A will be used and references will be made to Figures 8A-8C. However, the sample web site and the corresponding graphs in Figures 8A-8C are examples only and not to be limiting of the methods discussed herein.

In step 902, connection and/or communication pathways between web pages are determined for a particular time period. As noted above, the pathways can correspond to movement between the web pages by users. A graph can then be generated using the vertices to represent the web pages and the edges to represent the pathways, as shown in example connection graph 800 in Figure 8A.

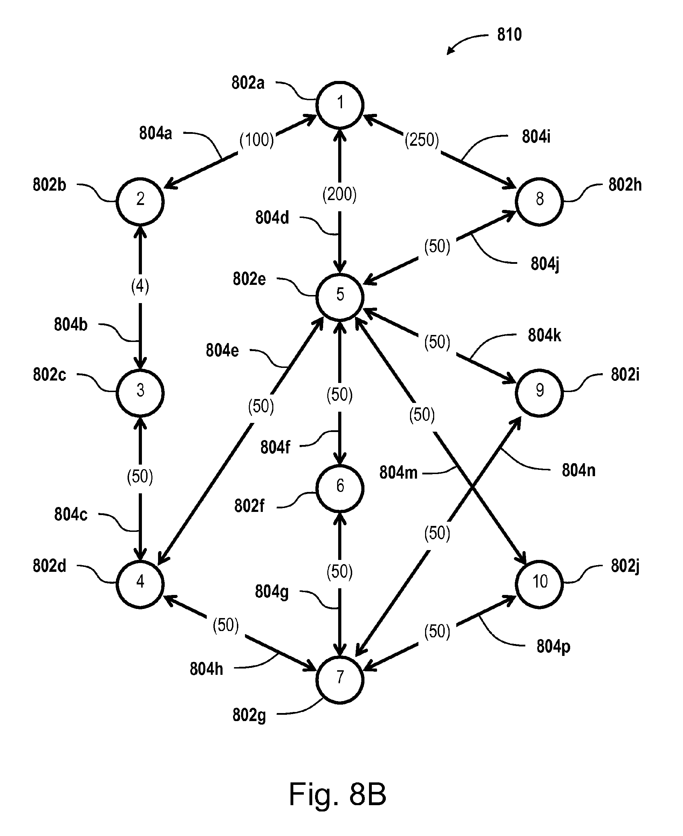

In step 904, edge weights are applied to each pathway. Each weight typically represents the number of users that have used the particular pathway (i.e., users that have moved between the respective web pages). As such, edge weight factors do not generally need to be selected nor do they need to be assigned weights. However, if desired, other edge weight factors can be used. Connection graph 810 shown in Figure 8B corresponds to connection graph 800, but with edge weights applied to each pathway.

In step 906, once the edge weights have been applied to each pathway, a centrality value can be calculated for each web page in a manner similar to that discussed above with respect to graphs 300 and 310.

In step 908, the web site structure can be modified based on the centrality values to optimize information flow. For example, if the pathway values are directional and represent the number of times users have used the pathway, web pages that are heavily used and those that are sparsely used can be quickly determined. Furthermore, the manner in which users moved between web pages can also be determined. This data can help to make information flow more efficiently by indicating where links should be added or removed.

For example, if data from connection graph 810 were to indicate that a high percentage (e.g., 90%) of all users accessing a particular web page did so from only one other web page, then the web developer may want to remove links to the particular web page from the other web pages. For example, using graph 810 one can determine that fifty users accessed web page "3" (i.e., vertex 802c) from web page "4" (i.e., vertex 802d), while only four users accessed web page "3" from web page "2" (i.e., vertex 802b). As such, over 90% of all users accessed web page "3" from web page "4". Thus, it may be beneficial to remove the link between web page "2" and web page "3" to more efficiently move information through the network.

As another example, if the data from graph 810 were to indicate that over 90% of all users accessed web page "7" (i.e., vertex 802g) within a few minutes after viewing web page "5" (i.e., vertex 802e), it may be beneficial to add a link from web page "5" to web page "7" to more efficiently move information and to improve user experience. (Although this type of data is not shown in Figure 8B, it can still be a part of the "graph" of the web site).

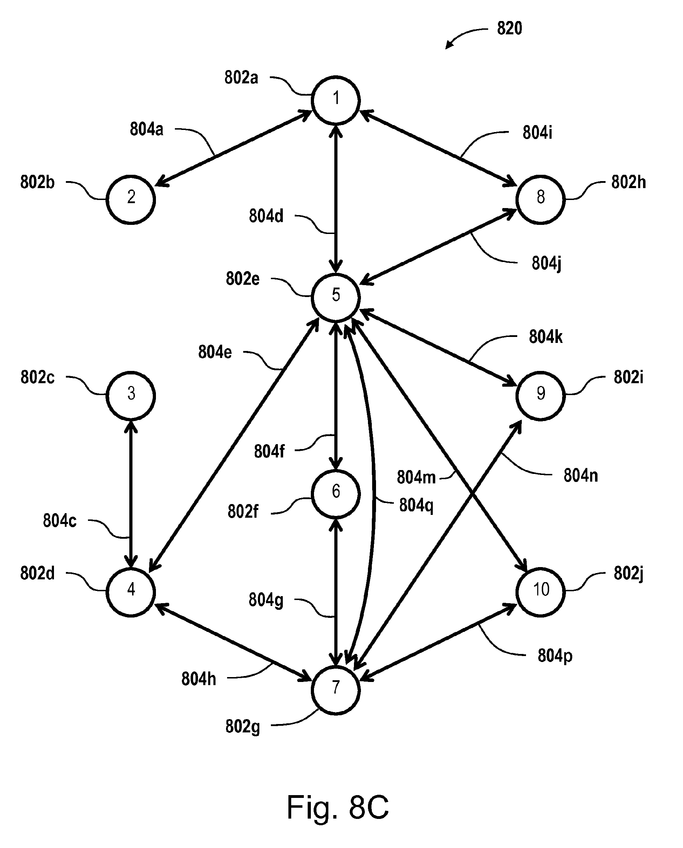

Figure 8c is a graphical representation of a connection graph 820, in which the link 804b between web page "2" and web page "3" has been removed, and a new link 804q has been added between web pages "5" and "7", based on the discussion above.

Of course, other information can also be obtained using the graph data. For example, in one embodiment certain nodes can be designated as "success" nodes (e.g., nodes representing web pages in which the user buys a product or subscribe to a service) and the path of the users that arrive at those success nodes can be tracked. Similarly, the path of the users that do not arrive at those success nodes can also be tracked. This information can be used to obtain an optimal graph structure, which can be used to modify the web site to increase efficiency of the information flow of the web site and to more effectively guide users to the web pages associated with the success nodes.

In other embodiments, different attributes can be attached to the nodes (web pages) and edges (pathways) based on various parameters of the users traversing the web pages (e.g., demographics, preferences, purchase history, etc.). By doing so, various information regarding users can be obtained with respect to the web pages and browsing therein. This information may be beneficial to advertisers or other entities attempting to access a particular subset of users; that is, using graphs, advertisers and other entities can determine which web pages would be the most useful for reaching a particular audience.

The present invention may be embodied in other specific forms without departing from its essential characteristics. Accordingly, the described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

1. A method of optimizing information flow for a plurality of users in a communication system having a plurality of forms of communication, the method being performed by one or more computer devices, the method comprising, for each form of communication of the communication system:

   determining connection and/or communication pathways between users;
   applying one or more edge weights to each pathway; and
   calculating a centrality value for each user; and
   introducing information into the communication system through one or more of the users, the one or more users being selected based on the centrality values associated therewith.

2. The method recited in claim 1, wherein introducing information into the communication system through the one or more users comprises:

   applying contribution weights to the centrality values calculated for each form of communication to normalize the centrality values of each form of communication with respect to the centrality values of the other forms of communication;
   calculating an overall centrality value for each user by aggregating the normalized centrality values corresponding to the user; and
   introducing information into the communication system through one or more users having the highest calculated overall centrality values.

3. The method recited in claim 1, wherein introducing information into the communication system through one or more of the users comprises:

   introducing information into each form of communication through the respective user having the highest calculated centrality value corresponding to the form of communication.

4. The method recited in any one preceding claim, wherein introducing information into the communication system through one or more of the users comprises electronically sending the information to the one or more users via one or more of the forms of communication.

5. The method recited in any one preceding claim, further comprising selecting a time period, such that the pathways between users are determined only for the selected time period.

6. The method recited in claim 5, wherein the time period comprises a non-contiguous time period.

**7.** The method recited in any one preceding claim, further comprising, for each form of communication, before applying the one or more edge weights:

selecting one or more edge weight factors; and
assigning the one or more edge weights to each edge weight factor.

**8.** The method recited in any one preceding claim, wherein, for each form of communication, calculating a centrality value for each user takes into account all pathways associated with the user.

**9.** The method recited in any one of claims 1 to 7, wherein calculating a centrality value for each user comprises at least one of:

a) calculating a degree centrality value for each user that only takes into account outgoing pathways associated with the user;
b) calculating a hub or authority centrality value for each user that takes into account the importance of other users to which the user is connected;
c) calculating a betweenness centrality value for each user that takes into account the topological position of the user within the graph; and
d) calculating a closeness centrality value for each user that takes into account the topological distance between the user and the other users within the graph.

**10.** The method of any one preceding claim, further including applying one or more edge weights to each pathway for each form of communication to determine an overall weighted pathway value for each pathway.

**11.** The method of any one preceding claim further including calculating an overall centrality value for each user by aggregating all of the overall weighted pathway values corresponding to the user.

**12.** The method of wherein the plurality of users is a plurality of web pages in a web site structure, and the method further includes:

determining connection and/or communication pathways between the web pages;
using the pathway edge weights to calculate a centrality value for each web page; and
modifying the web site structure based on the centrality values associated with the web pages.

**13.** The method recited in claim 14, wherein modifying the web site structure comprises removing pathways between connected web pages when the edge weight associated with the pathway is less than a predetermined percentage of all edge weights associated with one of the connected web pages.

**14.** The method recited in claim 13 or 14, wherein modifying the web site structure comprises adding a pathway between unconnected web pages when it is determined that a predetermined percentage of users access one of the unconnected web pages within a predetermined period of time of accessing the other unconnected web page.

**15.** A computer device configured to perform the method according to any one of claims 1 to 14.

Fig. 1

Fig. 2

Fig. 3A

Fig. 3B

400

| Determine Pathways Between Users for Form of Communication for Selected Time Period | 402 |

↓

| Select Edge Weight Factors for Connections | 404 |

↓

| Assign Weight to Each Edge Weight Factor | 406 |

↓

| Apply Edge Weights to Each Pathway Based on Weights of Weight Factors | 408 |

↓

| Calculate Centrality Value for Each User for Form of Communication | 410 |

# Fig. 4

— 500

| Determine Centrality Value for Each User for Each Form of Communication | ⟩— 502 |

↓

| Assign Contribution Weights to Each Form of Communication | ⟩— 504 |

↓

| Apply Contribution Weights to Each Form of Communication to Normalize Centrality Values | ⟩— 506 |

↓

| Calculate Overall Centrality Value for Each User Using Normalized Centrality Values | ⟩— 508 |

↓

| Introduce Information into System Through User Having Highest Overall Connection Value | ⟩— 510 |

# Fig. 5

600

Determine Pathways Between Users for All Forms of Communication — 602

Select Edge Weight Factors for Connections for Each Form of Communication — 604

Assign Weights to Each Edge Weight Factor for Each Form of Communication — 606

Determine Edge Weights for Each Pathway Based on Weights of the Weight Factors — 608

Determine Overall Connection Value for Each User — 610

Introduce Information into System Through User Having Highest Overall Connection Value — 612

Fig. 6

Fig. 7A

Fig. 7B

Fig. 8A

Fig. 8B

Fig. 8C

900

| Determine Movement Between Web Pages for Web Site for Selected Time Period | 902 |

↓

| Apply Edge Weights to Each Pathway | 904 |

↓

| Calculate Centrality Value for Each Web Page | 906 |

↓

| Modify Web Site Structure Based on Centrality Values | 908 |

Fig. 9